# EUROPÄISCHE PATENTSCHRIFT

(11) **EP 3 838 478 B1**
(45) Veröffentlichungstag und Bekanntmachung des Hinweises auf die Patenterteilung: **23.02.2022**
(21) Anmeldenummer: 19216571.0
(22) Anmeldetag: 16.12.2019
(51) Int. Cl.: B23Q 17/00

(54) **WERKZEUGMASCHINE**
MACHINE TOOL
MACHINE-OUTIL

(43) Veröffentlichungstag der Anmeldung: 23.06.2021
(73) Patentinhaber: HEGENSCHEIDT-MFD GmbH, 41812 Erkelenz (DE)
(72) Erfinder: Henk, Christian, 41812 Erkelenz (DE)
(74) Vertreter: Brinkmann & Partner

(56) Entgegenhaltungen:
- EP-A1- 1 339 014
- CN-A- 104 199 424
- JP-A- 2003 025 176

## Beschreibung

Die vorliegende Erfindung betrifft ein Verfahren zum Betrieb eines Systems zur Zuordnung von an Werkzeugträgern montierten Werkzeugen zur einer Einbauposition in einer Werkzeugmaschine sowie ein System zur Zuordnung von an Werkzeugträgern montierten Werkzeugen zu einer Einbauposition in einer Werkzeugmaschine.

In Abhängigkeit von der Aufgabenstellung und dem Einsatzzweck einer Werkzeugmaschine wird diese an unterschiedlichen Positionen mit unterschiedlichen Werkzeugen bestückt. Im Sinne der vorliegenden Erfindung umfasst die Bezeichnung Werkzeug grundsätzlich werkstückberührende Elemente, also auch Handlingkomponenten einer Maschine und dgl. Werkzeuge und Komponenten sind in aller Regel an sogenannten Werkzeugträgern angeordnet oder umfassen solche.

Für Betreiber ist es grundsätzlich von Interesse, zu wissen, ob ein Werkzeug an einer bestimmten Einbauposition der Maschine angeordnet ist, und wenn, ob es sich um das richtige Werkzeug handelt, und zwar richtig nach Art oder auch richtig in Bezug auf seinen Lebenszyklus.

Üblicherweise sind entsprechende Maschinen zu Produktionszwecken oder zu Bearbeitungszwecken im Einsatz, d.h., es handelt sich um ein Umfeld, bei dem schwere Erschütterungen auftreten, Verschmutzungen stattfinden, ggf. hohe Temperaturen auftreten, viele metallische Gegenstände und Oberflächen vorhanden sind und darüber hinaus in aller Regel nur wenig oder gar kein Einbauraum vorhanden ist.

Aus der JP 2003 025 176 A ist ein System zur Zuordnung von an Werkzeugträgern montierten Werkzeugen zu einer Einbauposition in einer Maschine bekannt, wobei ein an einem Werkzeugträger angeordneter beschreibbarer RFID Chip mit einem Transponder, einem Speicher und passiven digitalen Eingängen vorgesehen ist.

Ausgehend von dem beschriebenen Stand der Technik liegt der vorliegenden Erfindung die **Aufgabe** zugrunde, ein Betriebsverfahren für eine Werkzeugmaschine bereitzustellen sowie ein System vorzuschlagen, welche es ermöglichen, ohne großen baulichen Aufwand eine Kontrolle über Einbau, Position und dgl. von Werkzeugen in einer entsprechenden Maschine durchzuführen.

Zur technischen **Lösung** dieser Aufgabe wird ein System mit den Merkmalen des Patentanspruches 1 vorgeschlagen. Weitere Vorteile und Merkmale ergeben sich aus den Unteransprüchen.

Weiterhin wird ein Verfahren zum Betrieb einer Werkzeugmaschine vorgeschlagen, bei welcher ein entsprechendes System zum Einsatz kommt.

Die Erfindung umfasst auch eine Vorrichtung zur Anordnung an Werkzeugmaschinen und Werkzeugträgern, mit welcher eine entsprechende Zuordnung ermöglicht ist.

Die erfindungsgemäße Lösung umfasst die RFID-Technologie. Ein RFID-System umfasst grundsätzlich einen Transponder und ein Lesegerät. Der Transponder enthält einen kennzeichnenden Code. Entsprechende aktuelle RFID-Transponder sind beschreibbar und speichern die gewünschte Information. Die Kopplung geschieht durch vom Lesegerät erzeugte insbesondere magnetische Wechselfelder in geringerer Reichwerte oder, bei größeren Abständen, durch meist hochfrequente Radiowellen. Damit werden nicht nur die Daten übertragen, sondern auch der Transponder mit Energie versorgt. Dies bedeutet, der passive Transponder benötigt keine Stromversorgung.

Die im Lesegerät vorhandene Software steuert den Leseprozess und überträgt die Informationen an ein EDV-System.

Es ist bekannt, RFID-Chips mit sogenannten schaltenden Eingängen auszustatten. Im einfachsten Fall handelt es sich um Eingänge, die durch den Chip abfragbar sind. Ein Eingang kann beschaltet sein oder nicht, woraus sich zumindest zwei Zustände pro Eingang ergeben.

Die Erfindung nutzt derartige RFID-Chips, welche einen Transponder, einen Speicher und entsprechende beschaltbare Eingänge umfassen.

Gemäß der Erfindung wird maschinenseitig ein Kontaktfeld ausgebildet, welches mit den Eingängen des RFID-Chips kontaktierbar ist. Die Kontaktierung kann direkt erfolgen, indem die RFID-Eingänge mit den Kontaktfeldern direkt in Kontakt kommen, oder die Kontaktierung erfolgt durch Zwischenschaltung von Adaptern, Leitungen und dgl.

Die maschinenseitigen Kontaktfelder sind beschaltbar, so dass die einzelnen Kontakte des Kontaktfeldes unterschiedliche Schaltungszustände bzw. Ladungszustände haben können. Gemäß einem vorteilhaften Vorschlag der Erfindung werden die Kontaktfelder entweder überhaupt nicht beschaltet oder geerdet.

Durch die Verwendung beispielsweise von vier Kontaktfeldern, die RFID-chipseitig erfassender beschaltbaren Eingänge identifizierbar sind, lassen sich 16 unterschiedliche Beschaltungszustände realisieren. Es sind, da die Beschaltungszustände binär sind, in der Regel 2^{N} unterschiedliche Zustände. So kann ein Kontakt eines Kontaktfeldes unbeschaltet sein oder beschaltet sein, entweder mit Spannung oder beispielsweise mit Erdung (ground).

Ist der entsprechende Werkzeugträger mit dem entsprechenden Werkzeug bestückt, kann der RFID-Chip rechnerseitig bzw. EDV-seitig dem Werkzeug eineindeutig zugeordnet werden. Dies kann über eine Kennung erfolgen oder durch beschreiben des RFID-Chips direkt. Hieraus ergeben sich bei Bedarf auch Informationen über das Werkzeug selbst, also seine Einsatzfunktionen, Diagnoseergebnisse, Bauteilüberwachungsinformationen und dgl.

Wird nun der Werkzeugträger an der entsprechenden Position einer Werkzeugmaschine bestimmungsgemäß eingesetzt, werden die Kontakte des Kontaktfeldes der Maschine mit den digitalen Eingängen des RFID-Chips kontaktiert. Je nach Beschaltung des Kontaktfeldes lässt sich also die Beschaltung der digitalen Eingänge feststellen. Bei einer Abfrage durch das Lesegerät übermittelt der RFID-Chip zugleich zu der Kennung oder den sonstigen Informationen auch den jeweiligen Beschaltungszustand der digitalen Eingänge. Damit ist eine eineindeutige Einbauposition in der Maschine zuzuordnen.

Durch die Verwendung der Erfindung lässt sich also berührungslos feststellen, ob an einer vorgesehenen Einbauposition einer Werkzeugmaschine ein Werkzeug montiert ist, und wenn ja, welches.

Aufgrund der Nutzung der RFID-Technologie erfolgt dies ohne Energieversorgung und mit einem Minimum an Verkabelung. So kann beispielsweise zu einem Kontaktfeld ein Erdungskabel geführt werden, welches bestimmte Kontakte kontaktiert. Nicht kontaktierte Kontakte entsprechen einer 0, kontaktierte Kontakte einer 1. Bei beispielsweise vier kontakten lässt sich somit beispielsweise eine Kennung 0001, 0010, 0100, 1000 usw. durch Beschaltung erzeugen. Ist ein Werkzeugträger mit einem entsprechenden Werkzeug und RFID-Chip an einer Position eingebaut, so kann für die digitalen Eingänge, die in Kontakt mit den Kontakten des Kontaktfeldes sind, die Beschaltung festgestellt werden. Ist die Beschaltung beispielsweise 0010, so ist klar, dass sich um die auf diese Weise beschaltete Einbauposition, also die Werkzeugposition 2 handelt.

Die Erfindung wird gemäß einem vorteilhaften Vorschlag an einer Festwalzmaschine realisiert.

Während bei herkömmlichen Werkzeugmaschinen grundsätzlich die Werkzeuge, werkstückberührende Teile, Handlingkomponenten, Anbauorte wie Werkzeugrevolver, sonstige genormte Werkzeugschnittstellen, individuell gestaltete Schnittstellen und dgl. erfindungsgemäß ausgestaltet werden können, ist beispielsweise bei einer Festwalzmaschine ein entsprechendes schwieriges Ambiente vorzufinden.

Festwalzmaschinen werden genutzt, um Kurbelwellen an den Radien zwischen Hauptlager- und Pleuellagersitz und an den Kurbelwangen zu verfestigen. Dazu werden zangenförmige Werkzeuge, sogenannte Festwalzgeräte eingesetzt, welche mit einem Festwalzkopf und einem Stützrollenkopf bestückt sind. Diese Werkzeugköpfe sollen bezüglich Typ und Position überwacht werden. Eine Verkabelung zu jedem Werkzeug ist nicht einfach realisierbar und sollte in jedem Fall vermieden werden.

Gemäß der Erfindung werden die Werkzeugköpfe mit einem passiven RFID-Chip bestückt. Der Transponderchip wird mit Informationen zum konkreten Werkzeug beschrieben. Darüber hinaus werden über die beschaltbaren digitalen Eingänge entsprechende Kontaktinformationen bzw. Beschaltungsinformationen erfasst und beim Auslesen übermittelt. Bei einem Typ von Festwalzmaschinen sind beispielsweise vierzehn Werkzeugpositionen je Werkzeugtyp möglich. Es werden also wenigstens vier Kontaktfelder bzw. vier Transponderchipeingänge benötigt. Es sind somit bis zu achtundzwanzig Werkzeuge gleichzeitig in der Maschine. Sie haben in der Regel einen sehr nahen Abstand zueinander, so dass hier wenig Platz für Baugruppen verbleibt. Die in der Regel metallische Umgebung unterliegt Erschütterungen und Verschmutzungen. Auch können Temperaturen bis zu 80C° auftreten.

Über die erfindungsgemäße Kontaktfläche erfolgt eine Beschaltung, die der entsprechenden Einbauposition zugeordnet werden kann.

Auf diese Weise ist zu jedem Zeitpunkt durch einfaches Auslesen der RFID-Chips möglich, festzustellen, ob eine bestimmte Einbauposition der Maschine besetzt ist und, wenn ja, mit welchem Werkzeug oder welchem Werkzeugträger. Die EDV ist dann in der Lage, weitere Zuordnungen zu treffen.

Das zu wechselnde Element der Werkzeugmaschine ist der Werkzeugträger, der eine Anschlusskonstruktion darstellt, an welcher das Werkzeug befestigt ist. Dieser Werkzeugträger ist mit dem RFID-Chip ausgerüstet. Maschinenseitig ist eine Werkzeugaufnahme ausgebildet, in welche der Werkzeugträger eingesetzt wird. An der Werkzeugaufnahme ist das Kontaktfeld direkt ausgebildet.

Der Werkzeugträger kann direkt mit dem RFID-Chip besetzt sein oder seinerseits ein Kontaktfeld aufweisen, welches mit dem maschinenseitigen Kontaktfeld kontaktiert wird, um dann über entsprechende Leitungen mit dem RFID-Chip verbunden zu sein. Man spricht hier von einem Adapter, der nicht in dem Gegenstand der Ansprüche enthalten ist.

Gemäß der Erfindung wird vorgeschlagen, dass das Kontaktfeld einen Basiskontakt aufweist, der dann in unterschiedlicher Weise bzw. in unterschiedlichen Kombinationen mit den weiteren Kontakten elektrisch leitend verbunden ist. Über den Basiskontakt kann nun von dem RFID-Chip ausgehend eine Beschaltung erfolgen, die dann über die elektrischen Verbindungen aus den weiteren Kontakten des Kontaktfeldes "auslesbar" ist. Auf diese Weise wird vermieden, dass maschinenseitig irgendwelche Verkabelungen erforderlich sind, um das Kontaktfeld zu beschalten. Die Beschaltung erfolgt praktisch durch den RFID-Chip selbst.

Besteht also ein Kontaktfeld aus vier Kontakten, um beispielsweise 16 Beschaltungsmöglichkeiten bereitzustellen, so bedarf es eines fünften Kontaktelementes, dem sogenannten Basiskontakt, welcher dann in unterschiedlicher Kombinatorik mit den übrigen vier Kontaktfeldern verbunden ist.

Mit der Erfindung wird eine auch bei schwieriger Umgebung einer Werkzeugmaschine mit geringem Aufwand umsetzbares System und ein Betriebsverfahren vorgeschlagen, welche zu jeder Zeit eine eindeutige Werkzeugzuordnung zu den Einbaupositionen erlaubt.

Weitere Vorteile und Merkmale der Erfindung ergeben sich aus der folgenden Beschreibung anhand der Figuren. Dabei zeigen:
Fig. 1 eine perspektivische Darstellung eines Ausführungsbeispiels der Erfindung;
Fig. 2 eine Darstellung gemäß Fig. 1 in Frontansicht;
Fig. 3 eine Draufsicht auf ein Ausführungsbeispiel für ein Kontaktfeld;
Fig. 4 eine Darstellung einer Werkzeugaufnahme mit alternativer Beschaltung und

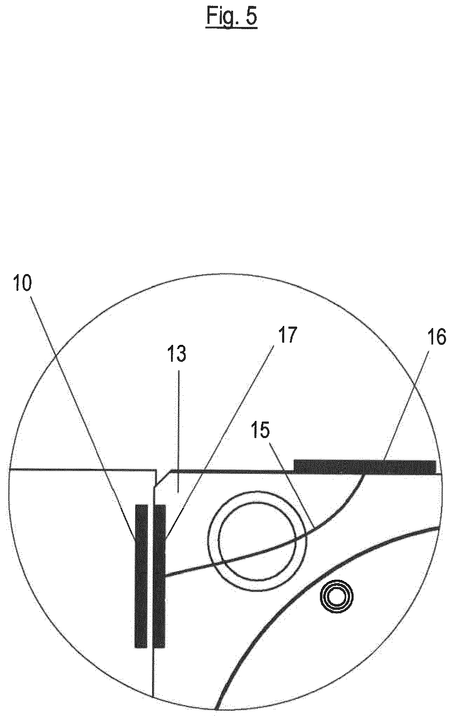

Fig. 5 eine Vergrößerung des Bereichs 5 gemäß Fig. 4.

In den Figuren sind gleiche Elemente mit gleichen Bezugszeichen versehen.

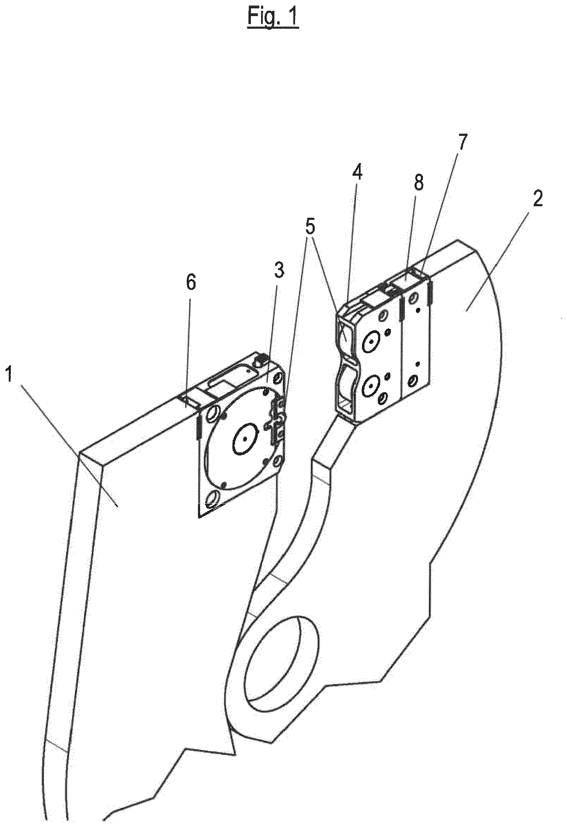

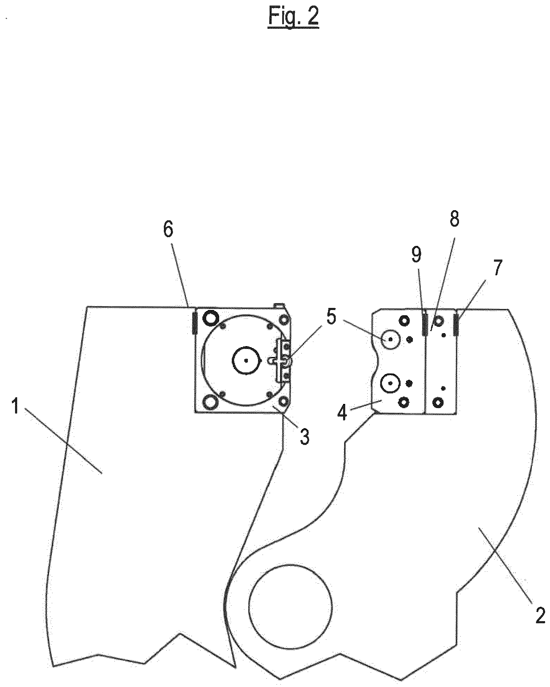

Die Fign. 1 und 2 zeigen beispielhaft die Anordnung an einer Maschine. Die Werkzeugaufnahme 1 und die Werkzeugaufnahme 2 einer Maschine sind im gezeigten Ausführungsbeispiel mit Werkzeugträgern 3 und 4 bestückt, die ihrerseits die Werkzeuge 5 tragen. Im gezeigten Ausführungsbespiel handelt es sich dabei um Rollen zum Walzen. Zwischen der Werkzeugaufnahme 1 und dem Werkzeugträger 3 ist der Kontaktbereich 6 ausgebildet, in welchem seitens der Werkzeugaufnahme ein Kontaktfeld und seitens des Werkzeugträgers ein RFID-Chip mit entsprechendem Kontaktierungsfeld angeordnet sind. Gleiches gilt für den Kontaktbereich 7 zwischen der Werkzeugaufnahme 2 und dem Werkzeugträger 4.

Im gezeigten Ausführungsbeispiel ist jedoch seitens der Werkzeugaufnahme 2 eine Besonderheit ausgebildet, indem nämlich zwischen dem eigentlichen Werkzeugträger 4 und der Werkzeugaufnahme 2 ein Aufnahmeadapter 8 angeordnet ist. Über das Kontaktfeld 7 ist der Adapter 8 mit der Werkzeugaufnahme 2 kontaktiert, der Adapter 8 wiederum über den Kontaktbereich 9 mit dem eigentlichen Werkzeugträger 4, wobei der RFID-Chip und das maschinenseitige Kontaktfeld im Kontaktbereich 8 angeordnet sind.

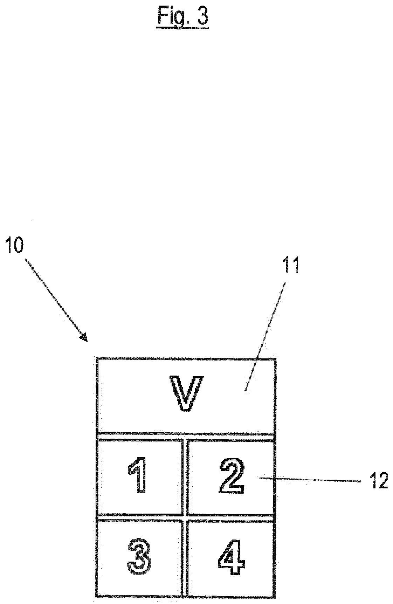

Fig. 3 zeigt beispielhaft ein Kontaktfeld 10, welches im gezeigten Ausführungsbeispiel einen Basiskontakt 11 und beschaltbare Kontakte 12 aufweist. Der Basiskontakt 11 kann mit den vier gezeigten beschaltbaren Kontakten 12 in beliebiger Kombination verbunden sein. Der RFID-Chip kann über den Basiskontakt 11 eine elektrische Spannung oder eine Erdung aufschalten. Über die Kontaktierung seitens des Kontaktfeldes kann nun der RFID-Chip die Beschaltungskombination der beschaltbaren Kontaktfelder feststellen und daraus auf die Position in erfindungsgemäßer Weise schließen.

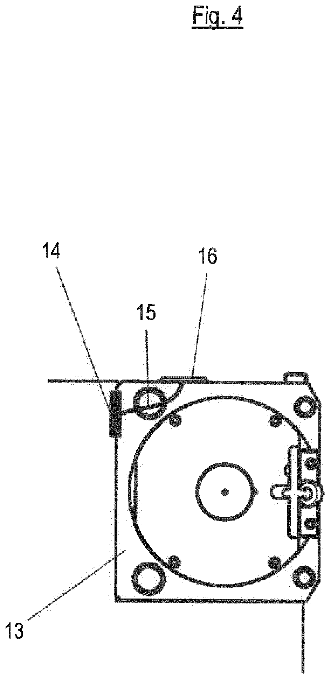

Fig. 4 zeigt eine Besonderheit für die Anordnung eines RFID-Chips am Werkzeugträger. Gezeigt ist der Werkzeugträger 13, der dem Werkzeugträger 3 entspricht. Im Kontaktbereich 14 sind allerdings nur zwei Kontaktfelder 10 und 17 ausgebildet, die miteinander kontaktiert sind. Das Kontaktfeld 17 wiederum ist über einen Leiter 15 mit dem RFID-Chip 16 verbunden.

Diese Ausführung kann an beliebiger Stelle in Kontaktbereichen angewandt werden, beispielsweise um eine sichere Anordnung für den RFID-Chip wählen zu können.

## Patentansprüche

1. System zur Zuordnung von an Werkzeugträgern (3, 4; 13) montierten Werkzeugen (5) zu einer Einbauposition in einer Maschine, umfassend:
- einen RFID Chip (16),
- der am Werkzeugträger (3, 4; 13) angeordnet ist,
- der beschreibbar ist,
- der einen Transponder aufweist,
- der einen Speicher aufweist,
- der passive digitale Eingänge aufweist,
und
- ein elektrisch beschaltbares Kontaktfeld (10; 17)
- mit Kontakten (11, 12)
- das an einer Werkzeugaufnahme (1, 2) der Maschine angeordnet ist,
**dadurch gekennzeichnet,**
**dass** die Kontakte (11, 12) des Kontaktfeldes (10; 17) mit den digitalen Eingängen des RFID-Chips (16) kontaktierbar sind und
**dass** der RFID-Chip (16) bei einem Abfragevorgang wenigstens eine Kennung und die Belegung der digitalen Eingänge übermittelt.

2. System nach Anspruch 1, **dadurch gekennzeichnet, dass** die digitalen Eingänge bei bestimmungsgemäßer Montage des Werkzeugträgers (3, 4; 13) in der Maschine direkt am Kontaktfeld (10; 17) kontaktiert sind.

3. System nach einem der vorhergehenden Ansprüche, **dadurch gekennzeichnet, dass** das an der Anschlussposition der Maschine angeordnete Kontaktfeld (10) vier Kontakte (11, 12) aufweist, die jeweils mit einem Eingangskontakt des RFID Chip (16) kontaktierbar sind.

4. System nach einem der vorhergehenden Ansprüche, **dadurch gekennzeichnet, dass** ein Kontakt (11, 12) des an der Anschlussposition der Maschine angeordneten Kontaktfeldes (10) mit Masse beschaltet und mit wenigstens einem der weiteren Kontakte (11, 12) verbunden ist.

5. System nach einem der vorhergehenden Ansprüche, **dadurch gekennzeichnet, dass** ein Kontakt (11, 12) des an der Anschlussposition der Maschine angeordneten Kontaktfeldes (10) durch den zugehörigen Kontakt des RFID Chips (16) beschaltet und mit wenigstens einem der weiteren Kontakte verbunden ist.

6. System nach einem der vorhergehenden Ansprüche 2 oder 3, **dadurch gekennzeichnet, dass** wenigstens 16 unterscheidbare Beschaltungen ausgeführt sind.

7. System nach einem der vorhergehenden Ansprüche, **dadurch gekennzeichnet, dass** der RFID Chip (16) mit Informationen zum Werkzeug (5) beschrieben ist.

8. System nach einem der vorhergehenden Ansprüche, **dadurch gekennzeichnet, dass** dieses in einer Festwalzmaschine ausgebildet ist.

9. System nach Anspruch 8, **dadurch gekennzeichnet, dass** der Werkzeugträger (3, 4) als Werkzeugköpfe, nämlich als ein Festwalzkopf und ein Stützwalzkopf der Festwalzmaschine ausgebildet sind .

10. Verfahren zum Betrieb eines Systems zur Zuordnung von an Werkzeugträgern (3, 4; 13) montierten Werkzeugen (5) zu einer Einbauposition in einer Maschine , wobei ein mit Informationen zum Werkzeug beschreibbarer, einen Transponder und einen Speicher aufweisender RFID Chip am Werkzeugträger angeordnet wird, **dadurch gekennzeichnet, dass**
passive digitale Eingänge des RFID Chips mit einem, in einer Anschlussposition der Maschine angeordneten maschinenseitigen Kontaktfeld kontaktieren,
und der RFID Chip bei einem Abfragevorgang wenigstens eine Kennung und die Belegung der digitalen Eingänge übermittelt.

11. Verfahren nach Anspruch 10, **dadurch gekennzeichnet, dass** RFID Chips (16) sowohl in einem Festwalzkopf und einem Stützrollenkopf einer Festwalzmaschine angeordnet sind und die Maschine an allen Anschlussstellen Kontaktfelder (10) aufweist.

12. Verfahren nach einem der Ansprüche 10 oder 11, **dadurch gekennzeichnet, dass** aus den vom RFID Chip (16) übermittelten Informationen über die Beschaltung der Eingänge des RFID Chips (16) auf die Einbauposition eines Werkzeugkopfes geschlossen wird.

13. Verfahren nach einem der vorhergehenden Ansprüche 10 bis 12, **dadurch gekennzeichnet, dass** aus den vom RFID Chip (16) übermittelten Informationen über seine Beschreibung auf das Werkzeug (5) geschlossen wird.

14. Verfahren nach einem der vorhergehenden Ansprüche 10 bis 13, **dadurch gekennzeichnet, dass** die von den RFID Chips (16) übermittelten Informationen zur Bauteilüberwachung ausgewertet werden.

## Claims

1. System for assigning tools mounted (5) on rams (3, 4; 13) to an installation position in a machine, comprising:
- a RFID chip (16),
- which is arranged on a ram (3, 4; 13),
- which is writeable,
- which has a transponder,
- which has a memory,
- which has passive digital inputs,
and
- an electrically switchable contact panel (10; 17)
- with contacts (11, 12)
- which is arranged on a tool holder (1, 2) of the machine,
**characterised in that**
that the contacts (11, 12) of the contact panel (10; 17) can be contacted to the digital inputs of the RFID chip (16) and
that the RFID chip (16) transmits at least one identifier and the assignment of the digital inputs during a query process.

2. System according to claim 1, **characterised in that** the digital inputs are contacted directly at the contact panel (10; 17) of the machine if the ram (3, 4; 13) is mounted as intended.

3. System according to one of the precedent claims, **characterised in that** the contact panel (10) arranged at the connection position of the machine shows four contacts (11, 12), each of which can be contacted with an input contact of the RFID chip (16).

4. System according to one of the precedent claims, **characterised in that** a contact (11, 12) of the contact panel (10) arranged at the connection position of the machine is connected to earth and at least to one of the other contacts (11, 12).

5. System according to one of the precedent claims, **characterised in that** a contact (11, 12) of the contact panel (10) arranged at the connection position of the machine is connected by the associated contact of the RFID chip (16) and is connected to at least one of the other contacts.

6. System according to one of the precedent claims 2 or 3, **characterised in that** at least 16 distinguishing circuits are realised.

7. System according to one of the precedent claims, **characterised in that** the RFID chip (16) includes information on the tool (5).

8. System according to one of the preceding claims, **characterised in that** this is realised in a deep rolling machine.

9. System according to claim 8, **characterised in that** the ram (3, 4) is designed as tool heads, i.e. as a deep rolling head and as a support roller head of the deep rolling machine.

10. Method for operating a system assigning tools (5) mounted on rams (3, 4; 13) to an installation position in a machine, where a ram is arranged having an RFID chip which is writeable with information on the tool, and which has a transponder and a memory, **characterised in that**
passive digital inputs of the RFID chip can be contacted with a contact panel, arranged on the machine side in the connection position of the machine,
and the RFID chip transmits at least one identifier and the assignment of the digital inputs during a query process.

11. Method according to claim 10, **characterised in that** RFID chips (16) are arranged in a deep rolling head as well as in a support roller head of a deep rolling machine and the machine has contact panels (10) at all connection points.

12. Method according to one of the claims 10 or 11, **characterised in that** the installation position of a tool head is inferred from the information transmitted by the RFID chip (16) about the wiring of the inputs of the RFID chip (16).

13. Method according to one of the preceding claims 10 to 12, **characterised in that** the tool (5) is inferred from the information transmitted by the RFID chip (16) about its description.

14. Method according to one of the preceding claims 10 to 13, **characterised in that** the information transmitted by the RFID chips (16) is evaluated for component monitoring.

## Revendications

1. Système d'affectation d'outils (5) montés sur des coulisseaux porte-outils (3, 4 ; 13) sur une machine en position de montage, comprenant les éléments suivants :
- une puce RFID (16),
- qui est disposée sur le coulisseau porte-outil (3, 4 ; 13),
- qui est inscriptible,
- qui est équipée d'un transpondeur,
- qui est équipée d'une mémoire,
- qui est équipée d'entrées électroniques passives,
et
- une surface de contact à câblage électrique (10 ; 17),
- équipée de contacts (11, 12),
- qui est disposée dans un logement d'outil (1, 2) de la machine,
**caractérisé par le fait que**
les contacts (11, 12) de la surface de contact (10 ; 17) peuvent être mis en contact avec les entrées électroniques de la puce RFID (16), et
que, lors d'une opération d'interrogation, la puce RFID (16) transmet au moins une identification et l'affectation des entrées électroniques.

2. Système selon la revendication 1, ayant pour caractéristique que les entrées électroniques sont mises en contact directement au niveau de la surface de contact (10 ; 17) de la machine lorsque le montage du coulisseau porte-outil (3, 4 ; 13) est effectué de manière conforme à la destination.

3. Système selon l'une des revendications précédentes, ayant pour caractéristique que la surface de contact (10) disposée au niveau de la position de raccordement de la machine présente quatre contacts (11, 12) pouvant chacun être reliés à un contact de la puce RFID (16).

4. Système selon l'une des revendications précédentes, ayant pour caractéristique que la surface de contact (10) disposée au niveau de la position de raccordement de la machine présente un contact (11, 12) qui est relié à la masse, ainsi qu'à au moins l'un des autres contacts (11, 12).

5. Système selon l'une des revendications précédentes, ayant pour caractéristique que la surface de contact (10) disposée au niveau de la position de raccordement de la machine présente un contact (11, 12) qui est raccordé au contact correspondant de la puce RFID (16), ainsi qu'à au moins l'un des autres contacts.

6. Système selon l'une des revendications 2 ou 3, ayant pour caractéristique qu'au moins 16 raccordements distincts sont réalisés.

7. Système selon l'une des revendications précédentes, ayant pour caractéristique que la puce RFID (16) est paramétrée avec des informations relatives à l'outil (5).

8. Système selon l'une des revendications précédentes, ayant pour caractéristique d'être réalisé sur une machine de galetage.

9. Système selon la revendication 8, ayant pour caractéristique que les coulisseaux porte-outils (3, 4) sont réalisés comme des têtes d'outil, soit comme tête de galetage et tête de galet d'appui de la machine de galetage.

10. Procédé d'exploitation d'un système d'affectation d'outils (5) montés sur des coulisseaux porte-outils (3, 4 ; 13) sur une machine en position de montage, à puce RFID intégrée au coulisseau porte-outil, équipée d'un transpondeur et d'une mémoire, et sur laquelle il est possible d'inscrire des informations relatives à l'outil, ayant pour caractéristique
qu'au niveau de la machine en position de raccordement, des entrées électroniques passives de la puce RFID sont reliées à une surface de contact intégrée à la machine,
et que, lors d'une opération d'interrogation, la puce RFID transmet au moins une identification et l'affectation des entrées électroniques.

11. Procédé selon la revendication 10, ayant pour caractéristique que des puces RFID (16) sont intégrées à la fois sur la tête de galetage et sur la tête de galet d'appui d'une machine de galetage, et que la machine est équipée de surfaces de contact (10) à tous les points de raccordement.

12. Procédé selon l'une des revendications 10 ou 11, ayant pour caractéristique que la position de montage d'une tête d'outil est déduite des informations transmises par la puce RFID (16) sur le raccordement de ses entrées.

13. Procédé selon l'une des revendications précédentes 10 à 12, ayant pour caractéristique que l'outil (5) peut se déduire à partir des informations transmises par la puce RFID (16) sur sa description.

14. Procédé selon l'une des revendications précédentes 10 à 13, ayant pour caractéristique que les informations transmises par la puce RFID (16) sont utilisées pour effectuer la surveillance des composants.
